# EUROPÄISCHE PATENTSCHRIFT

(11) **EP 1 849 281 B1**
(45) Veröffentlichungstag und Bekanntmachung des Hinweises auf die Patenterteilung: **25.06.2008**
(21) Anmeldenummer: 06706687.8
(22) Anmeldetag: 06.02.2006
(51) Int. Cl.: H04L 29/06, H04L 29/08

(54) **FUNKÜBERTRAGUNGSSYSTEM UND VERFAHREN FÜR DESSEN BETRIEB**
RADIO TRANSMISSION SYSTEM AND METHOD FOR THE OPERATION THEREOF
SYSTEME DE TRANSMISSION RADIO ET PROCEDE PERMETTANT DE LE FAIRE FONCTIONNER

(30) Priorität: 15.02.2005 DE 102005006909; 28.06.2005 DE 102005030108
(43) Veröffentlichungstag der Anmeldung: 31.10.2007
(73) Patentinhaber: Rohde & Schwarz GmbH & Co. KG, 81671 München (DE)
(72) Erfinder: GREINER, Günter, 81539 München (DE); LESCHHORN, Rüdiger, 82269 Geltendorf (DE)
(74) Vertreter: Körfer, Thomas
(86) Internationale Anmeldenummer: PCT/EP2006/001032
(87) Internationale Veröffentlichungsnummer: WO 2006/087118

(56) Entgegenhaltungen:
- WO-A-03/071751
- DE-A1- 19 807 931
- FECKO M A ET AL: "A success story of formal description techniques: Estelle specification and test generation for MIL-STD 188-220" COMPUTER COMMUNICATIONS, ELSEVIER SCIENCE PUBLISHERS BV, AMSTERDAM, NL, Bd. 23, Nr. 12, Juli 2000 (2000-07), Seiten 1196-1213, XP004205312 ISSN: 0140-3664

## Beschreibung

Die Erfindung betrifft ein Funkübertragungssystem für insbesondere militärische Anwendungen und ein entsprechendes Betriebsverfahren.

Die militärischen Kommunikationsmittel befinden sich seit geraumer Zeit im Umbruch, wie er noch nie zuvor zu beobachten war. Heute bietet die im zivilen Bereich verfügbare Technik im Prinzip die Möglichkeit, an jedem Punkt der Erde jede beliebige Information automatisch ohne menschliche Mithilfe abzurufen und mit jedem Netzteilnehmer fast verzögerungsfrei zu kommunizieren - die Entwicklung des Internets ist ein qualitativer und quantitativer Sprung in der Kommunikation, der noch zu Beginn der 90er Jahre unvorstellbar war. Setzt man diese Art der Kommunikation auch für militärische Zwecke ein, so eröffnen sich völlig neue Möglichkeiten.

Moderne Network-Centric-War-fare-Konzepte stellen Informationen in geeigneter Form und ohne Zeitverzug überall dort zur Verfügung, wo sie benötigt werden. Dafür geeignete Kommunikationssysteme entwickelt man bereits mit hoher Intensität; an sie werden anspruchsvolle Forderungen gestellt, z. B. hohe Mobilität, größtmögliche Interoperabilität (auch mit zivilen Behörden (BOS)), Transparenz der Netze (drahtgebunden/drahtlos, PSTN, ISDN, LAN, WAN / Funk-/Richtfunk-Netz, militärisch/zivil), universelle Erreichbarkeit, Informationsübertragung im Verbund Aufklärung/Führung/Wirkung: Positions-Report, Lagedarstellung, Freund-Feind-Kennung, Sensordaten, Bilder von Digitalkameras, GPS-Tracking, e-mail, Kurzmeldungen, sonstige IP-Dienste, spontane mobile Vernetzbarkeit (MANET) und Unabhängigkeit von einer Infrastruktur.

Die Art der Kommunikation von taktischen Truppen ändert sich zunehmend. Bisher stand fast ausschließlich die Applikation "sichere Sprachverbindung" im Vordergrund, d. h. Sprache verschlüsselt und resistent gegenüber möglichen Störern.

Heute besteht neben dem Sprechfunk zunehmend der Wunsch nach der Vernetzung unterschiedlicher Kommunikationsteilnehmer bei persönlicher Erreichbarkeit. Diese Art der Vernetzung zu Systemen erfordert eine Interoperabilität der Kommunikationstechniken und eine Integration von Netzen zu Verbundsystemen.

Aus Gründen der Interoperabilität ist für die Vernetzung der Datenkommunikation die Verwendung von InternetProtokollen, z. B. TCP/IP, erforderlich. Die funktechnische Umsetzung kann schmalbandig z. B. mit dem MIL-STD-188-220 B erfolgen. Der Standard spezifiziert die unteren Protokollebenen für eine Interoperabilität von taktischen Funkgeräten.

Der taktische Funk basiert auf Kanälen mit derzeit 25 kHz Bandbreite, über die üblicherweise brutto 16 kbit/s, mit FEC bis zu 9,6 kbit/s übertragen werden können. Die Verwendung von Standard-Internetprotokollen zur Realisierung spontaner mobiler Vernetzbarkeit (MANET) in der militärischen Funkkommunikation wäre eine schnelle und kostengünstige Lösung. Dies erfordert jedoch Datenraten im Bereich von Mbit/s und damit Bandbreiten im MHz-Bereich. Sie können deshalb in den nur 25 kHz breiten Funkkanälen nicht genutzt werden. Funkgeräte mit derartig hohen Bandbreiten wurden bisher im taktischen Bereich bis zur Kompanieebene nicht eingesetzt.

Funkgeräte mit hohen Datenraten und damit großen Signalbandbreiten unterliegen bei Ausbreitung der Funksignale entlang der Erdoberfläche (also ohne Freiraumausbreitung wie bei fliegenden Plattformen) folgenden Einschränkungen: Für einen effektiven Einsatz empfiehlt sich ein höherer Frequenzbereich (225 MHz bis 400 MHz, aber auch bis zu 2 GHz oder darüber). Allerdings sinkt die Reichweite von Funksignalen mit zunehmender Frequenz. Die Erhöhung der Sendeleistung vergrößert diese Reichweite nur mäßig. Die achtfache Sendeleistung ergibt nur eine doppelte Reichweite.

Die benötigte Bandbreite ist proportional zur gewünschten Datenrate. Allerdings sinkt die Reichweite mit zunehmender Bandbreite. Das hat zur Folge, dass bei einer Erhöhung der Datenrate von 16 kbit/s auf 1,6 Mbit/s die Reichweite ca. um den Faktor 5 abnimmt. Weil hohe Bandbreiten in der Regel höhere Sendefrequenzen erforderlich machen - da der taktische Frequenzbereich 30 MHz bis 88 MHz wegen der hohen Bandbreite und dichten Belegung nicht mehr genutzt werden kann - ist mit einer weiteren Einbuße an Reichweite zu rechnen.

Höherwerte Modulationsarten benötigen höhere Störabstände und bewirken daher bei gleicher Sendeleistung eine geringere Reichweite als bei Verwendung einfacherer Modulationsverfahren. Die Zahl der für die Funkabdeckung notwendigen Funkgeräte hängt sehr stark von der Reichweite ab.

Die DE 196 51 593 A1 und die DE 198 07 931 A1 beschäftigen sich mit einer Optimierung dieser Parameter.

Breitbandige Funkgeräte für hohe Datenraten sind sicherlich die ideale Lösung für die vernetzte Kommunikation. Allerdings ist ihre Funkreichweite begrenzt. Funkgeräte mit 25-kHz-Kanälen zeichnen sich durch mittlere Datenraten, hohe Reichweiten und robuste Modulationsverfahren aus. Deswegen sind sie im taktischen Einsatz unverzichtbar. Zusätzlich zu sicherem Sprechfunk können sie mit IP-unterstützenden Protokollen wie dem MIL-STD-188-220 B in derzeitige und künftige Datennetze eingebunden werden.

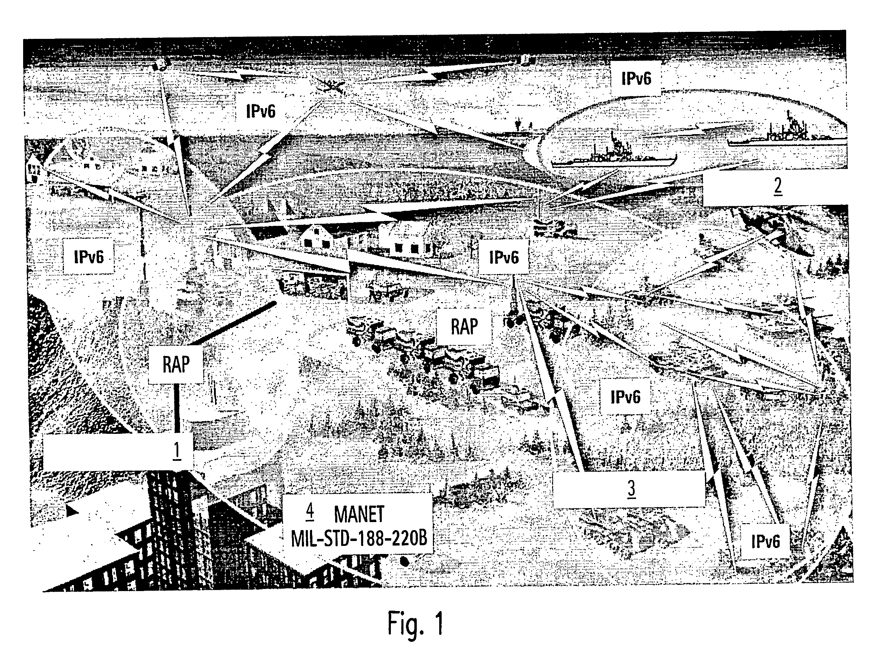

Mit dem MIL-STD-188-220 B sind selbst organisierende Netze mit automatischem Routing realisierbar, in denen Applikationen unterstützt werden, die auf dem Internetprotokoll IP basieren. Damit lässt sich der herkömmliche taktische Funk zum digitalen Gefechtsfeldnetz erweitern, wie dies in Fig. 1 dargestellt ist.

Das kombinierte Hardware-/Software-Sytem 1 gewährleistet die moderne Internet-/Intranet-Kommunikation über verschiedene Übertragungsmedien. Das Signal Management & Control System 2 automatisiert die Funkkommunikation auf Schiffen, während das Signal Management & Control System 3 die Funkkommunikation der landgestützten Einheiten organisiert. Alle Systeme 1 bis 3 sind in das MANET-adhoc-Netzwerk 4 eingebunden.

Drahtgebundene Netze und (quasistationäre) Funknetze mit hohen Datenraten wie z.B. Richtfunknetze unterscheiden sich in ihren Eigenschaften erheblich von mobilen taktischen Funknetzen. Herkömmliche eingeführte taktische Funkgeräte stellen derzeit Datenraten bis maximal 16 kbit/s zur Verfügung. Von der neu auf den Markt gekommenen Generation von Funkgeräten werden 72 kbit/s unterstützt.

Funkgeräte mit Datenraten in der Größenordnung von Mbit/s befinden sich im Entwicklungsstadium. Kommerzielle Lösungen wie zum Beispiel WLAN stellen nur in Sonderfällen eine befriedigende Lösung dar, da sie ausschließlich auf einer voreingestellten Frequenz arbeitet. Der wesentliche Nachteil dieser Lösung ist, dass sie z.B. nicht gegen gezielte Störungen geschützt ist. Weitere Nachteile eines Ein-Kanal-Systems werden bei zukünftigen modernen Breitbandfunkgeräten durch die unten beschriebenen Eigenschaften wie z.B. die Adaption der Wellenform an die variierende Kanalqualität vermieden.

Die Qualität und Kapazität der Funkkanäle hängt im mobilen Einsatz von der Topologie und der Beschaffenheit des Geländes sowie von der zu überbrückenden Entfernung ab.

Das heißt, dass die verfügbare Kanalkapazität zwischen der maximalen Datenrate eines Breitbandfunkgerätes von z.B. 2 Mbit/s und der eines Schmalbandfunkgerätes von einigen kbit/s variieren kann. Des Weiteren werden die Eigenschaften der Funkkanäle durch physikalische Randbedingungen geprägt. Diese sind z. B.: Dämpfung, Reflexion, Brechung, Beugung; Dopplerverschiebung.

Sie führen zu Empfangsstörungen, Mehrwegeausbreitung und frequenzselektivem und zeitvariantem Schwund. Die davon betroffene Eigenschaft der Funkkanäle ist im Wesentlichen die Signalqualität, die beschrieben wird durch Signal/Störabstand, Signalverzerrung und Signaljitter und davon abgeleitet die Kanalkapazität (Datenrate/Bandbreite), die Bitfehlerrate BER (Bit Error Rate) und die Reichweite.

Die Funknetze können in bestimmten Einsatzfällen, insbesondere bei größeren Abständen der Funkknoten, sog. "Bottle-Necks" in den Netzen darstellen. Um trotz dieser aus der Mobilität der Funknetze und deren physikalischen Eigenschaften resultierenden temporär möglichen Einschränkungen der Kanalkapazität und -qualität eine befriedigende Nutzung der Netze zu erzielen, sind mehrere Maßnahmen zu untersuchen und in den zukünftigen Netzen zu realisieren.

Der Erfindung liegt die Aufgabe zu Grunde ein Funkübertragungssytem und ein Verfahren zum Betrieb dieses Funkübertragungssystems zu schaffen, welches flexibel auf unterschiedliche Anforderungen von unterschiedlichen durch das Funkübertragungssystem zu unterstützende Dienste und flexibel auf unterschiedliche Qualitäten des Funkkanals reagiert.

Die Aufgabe wird durch ein Funkübertragungssystem gemäß Anspruch 1 und ein Verfahren zum Betreiben eines Funkübertragungssystems nach Anspruch 10 gelöst. Die Unteransprüche enthalten vorteilhafte Weiterbildungen der Erfindung.

Ein Ausführungsbeispiel der Erfindung wird im Folgenden anhand der Zeichnung näher beschrieben. In der Zeichnung zeigen:
- Fig. 1: ein Beispiel eines digitalen Gefechtfeldnetzes und
- Fig. 2: ein Blockdiagramm des erfindungsgemäßen Verfahrens.

Für das Problem der zeitvarianten Qualität und Kapazität von Funkkanälen wird erfindungsgemäß ein Paket bestehend aus drei Lösungen vorgeschlagen:
- Optimierung der Qualität und Kapazität der einzelnen Funk-Links
- Angepasste und optimierte Routenwahl
- Auswahl geeigneter Applikationen und/oder Adaption von Applikationen

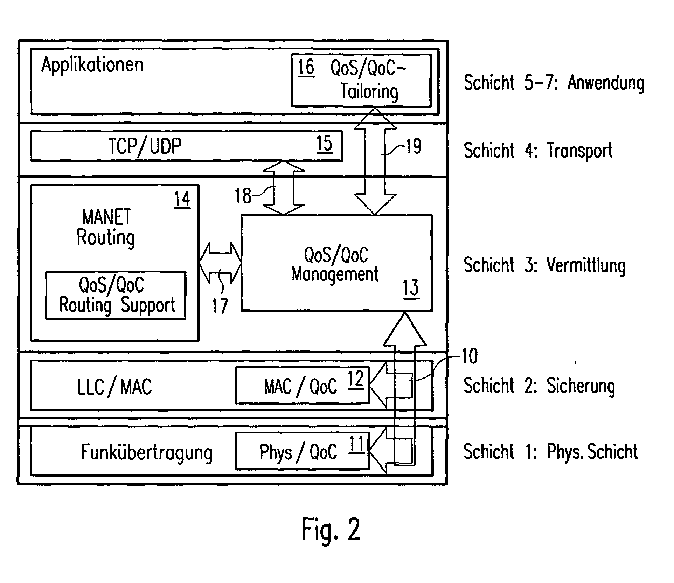

Dazu sieht der Lösungsansatz, wie in Fig. 2 dargestellt, eine Aufgabenteilung zwischen dem Bereich der klassischen Funktechnik (Schichten 1 und 2 des ISO/OSI-Schichtenmodells) und der Netzwerk-Technik (Schicht 3 und höher) und eine Kooperation der beiden Bereiche vor. Zwischen diesen Bereichen ist eine Schnittstelle 10 vorgesehen, über die Qualitätsmerkmale und ggf. Steuerdaten ausgetauscht werden können, wobei die Steuerdaten als Reaktion auf die ausgetauschten Qualitätsmerkmale erzeugt werden.

Unterhalb der Schnittstelle 10, d.h. im klassischen Funk-Bereich, müssen im Block 11 der Schicht 1 Maßnahmen (Phys/QoC) ergriffen werden, den Funkkanal zu analysieren und entsprechende Qualitätsmerkmale festzulegen, sowie die Funkkanäle bzw. Wellenformen durch adaptive Maßnahmen an die jeweilige topographische Situation anzupassen.

Die Qualitätsmerkmale dazu werden in Anlehnung an die für Netzwerke definierte Qualität eines Dienstes QoS (Quality of Service) im Folgenden QoC (Quality of Channel) genannt. Sie werden im Funktionsblock 11 (Phys/QoC) erarbeitet.

Zusätzlich müssen Funktionen (MAC/QoC) vorgesehen werden, den Kanalzugriff (Link Management, Slot Multiplexing) und den Datenfluss steuern zu können und zwar in Abhängigkeit von der aktuellen Kanalqualität und von der Priorität der Pakete und ihren Anforderungen an die Kanalqualität (Class of Service, CoS). Dies erfolgt im Funktionsblock 12 (MAC/QoC) der Schicht 2. Die Priorität der Pakete kann entweder service- oder/und nutzerbezogen festgelegt werden. Dies erfolgt ebenfalls im Funktionsblock 12 (MAC/QoC).

Oberhalb der QoC - QoS - Schnittstelle 10, also im Netzwerk - Bereich, müssen Wege gefunden werden, die Kommunikation mit Hilfe dieser QoC-Werte an die Eigenschaften der zu nutzenden Kanäle anzupassen.

Im Funktionsblock 13 der Schicht 3 (QoC/QoS - Management) müssen z. B. folgende Maßnahmen ergriffen werden:
- Sortierung der Datenpakete nach Priorität (MAC/QoC)
- angepasstes Queuing (MAC/QoC), d. h. Bildung von Warteschlangen je nach Priorität
- Unterstützung der MANET-Funktionen (QoS/QoC Routing Support), z.B. durch
   - Reichweitenberechnung mit Hilfe digitalisierter Karten
   - Verbindungsanalyse mit Hilfe ausgetauschter Ortskoordinaten
   - Verbindungsprognosen mit Hilfe der Geschwindigkeitsvektoren der die Funkstationen beinhaltenden Objekte
   - Ermittlung der Qualitätsmerkmale für die einzelnen Links durch die Funkgeräte
   - Kennzeichnung der Pfadqualitäten in den Routing-Tabellen
- Umsetzung der QoC-Werte in die QoS-Werte und Anpassung an IP-Funktionalität (Anpassung an TCP/UDP)
- Hinweis an den Nutzer über die verfügbare Kanalqualität und -kapazität (QoS/QoC Tailoring) und Anzeige der verfügbaren Dienste
- Anpassung der Applikationen an die verfügbare Kanalqualität und -kapazität (QoS/QoC Tailoring)
- Reaktionen und Maßnahmen bezüglich der Kanalkapazität z.B. Priorisierung, Datenreduktion oder Abbruch, was auf der Ebene der Anwendung im Funktionsblock 16 (QoS/QoC Tailoring) umgesetzt wird.

Zur Koordination der Maßnahmen unterhalb und oberhalb der Schnittstelle 10 müssen die QoC- und QoS - Kenngrößen aufeinander abgebildet werden. Dies ist auch deswegen erforderlich, damit ein bruchfreier Übergang zwischen Funknetzen und leitungsgebundenen Netzen erfolgen kann, d.h., dass die für leitungsgebundene Netze definierten Dienstmerkmale (QoS - Mechanismen) auch in Funknetzen umgesetzt werden.

Es sind sowohl der Kanalzugriff (Medium Access, MAC), das MANET - Routing im Funktionsblock 14 der Schicht 3 als auch die Transport-Protokolle TCP/UDP, in welche die Daten im Funktionsblock 15 der Schicht 4 umgesetzt werden, und die Applikationen der Schichten 5 bis 7 betroffen. Deswegen muss die QoC/QoS - Abbildung um zusätzliche Funktionen erweitert werden, was in einem Funktionsblock 13 (QoC/QoS - Management) erfolgt. Dazu ist der Funktionsblock 13 über weitere Schnittstellen 17, 18 und 19 mit den Funktionsblöcken 14, 15 und 16 verbunden.

Die Funktion des in Fig. 2 dargestellten Funkübertragungssystems lässt sich somit wie folgt erläutern:

Das Funkübertragungssystem hat mehrere Bearbeitungsschichten zur Übertragung von Datenpaketen zwischen verschiedenen Funkgeräten in einem Funkkanal und umfasst mehrere Funktionseinheiten und eine Steuereinheit. Eine erste Funktionseinheit 11 ist in einer physikalischen Funkübertragungs-Schicht lokalisiert und analysiert den Funkkanal, um die Qualität des Funkkanals QoC festzustellen.

Eine zweite Funktionseinheit 12 ist in einer Datensicherungs-Schicht lokalisiert und steuert den Zugriff auf den Funkkanal in Abhängigkeit von der aktuellen Qualität des Funkkanals QoC und der Priorität der zu übertragenden Datenpakete je nach Qualität QoS des durch die Datenpakete realisierten Dienstes. Eine dritte Funktionseinheit 14 ist in einer Vermittlungs-Schicht lokalisiert und steuert die Vermittlung der Datenpakete.

Eine übergeordnete Steuereinheit 13 gibt die Datenpakete nur dann zur Vermittlung durch die dritte Funktionseinheit 14 frei, wenn die Qualität QoS des durch die Datenpakete realisierten Dienstes mit der in der ersten Funktionseinheit 11 festgestellten Qualität des Funkkanals QoC hinreichend korrespondiert, d. h. wenn für die Qualität QoS des Dienstes bzw. Dienstmerkmals der Anwendung eine Mindest-Qualität QoC des Funkkanals vorliegt.

Die Steuereinheit 13 ist mit der ersten Funktionseinheit 11 und mit der zweiten Funktionseinheit 12 über eine erste Schnittstelle 10 und mit der dritten Funktionseinheit 14 über eine zweite Schnittstelle 17 verbunden.

Ferner ist die Steuereinheit 13 vorzugsweise über eine dritte Schnittstelle 18 mit einer vierten Funktionseinheit 15 in einer Transport-Schicht verbunden. Die vierte Funktionseinheit 15 setzt die Datenpakete in ein entsprechendes Transport-Protokoll, z. B. TCP/UDP, um.

Die Steuereinheit 13 legt das entsprechende Transport-Protokoll TCP/UDP auf der Grundlage der Qualität QoS des durch die Datenpakete realisierten Dienstes und der in der ersten Funktionseinheit 11 festgelegten Qualität QoC des Funkkanals fest und steuert die vierte Funktionseinheit entsprechend an.

Die Steuereinheit 13 steht vorzugsweise über eine vierte Schnittstelle 19 mit einer fünften Funktionseinheit 16 in einer Anwendungs-Schicht in Verbindung. Wenn die Datenpakete zur Vermittlung durch die dritte Funktionseinheit 14 nicht freigegeben werden können, wird von der fünften Funktionseinheit 16 vorzugsweise eine entsprechende Meldung an den Benutzer ausgegeben. Den Benutzern können dabei auch alle derzeit verfügbaren Dienste angezeigt werden.

Die Steuereinheit 13 steuert dabei die dritte Funktionseinheit 14 so an, dass diese durch geeignete Vermittlung (Routing) die für die jeweilige Qualität QoS des durch die Datenpakete realisierten Dienstes benötigte Übertragungskapazität des Funkkanals zur Verfügung stellt.

Die Steuereinheit 13 nimmt vorzugsweise eine Sortierung der Datenpakete je nach der von der jeweiligen Qualität QoS des durch die Datenpakete realisierten Dienstes geforderten Priorität vor. Danach wird die dritte Funktionseinheit 14 zur Durchführung der Vermittlung der Datenpakete in dieser Reihenfolge angesteuert.

Die Steuereinheit 13 kann auch eine Prognose der sich entwickelnden zukünftigen Qualität des Funkkanals auf der Grundlage von ermittelten Geschwindigkeitsvektoren der sich bewegenden Funkgeräte vornehmen.

Zusammenfassend lässt sich der Lösungsansatz so beschreiben, dass die im mobilen Einsatz notwendige permanente Ermittlung möglicher Pfade (Funkwege) des Netzes (MANET) durch intelligente Verfahren unterstützt wird. Die Funkkanäle werden durch adaptive Maßnahmen an die jeweilige topographische Situation angepasst und die jeweilige Kanalkapazität und -qualität der einzelnen Funkstrecken werden aufgezeichnet und beim Transport der Datenpakete entsprechend berücksichtigt. Die Erfindung ist nicht auf das beschriebene Ausführungsbeispiel beschränkt. Alle beschriebenen Maßnahmen sind beliebig miteinander kombinierbar.

## Patentansprüche

1. Funkübertragungssystem mit mehreren Bearbeitungsschichten zur Übertragung von Datenpaketen zwischen verschiedenen Funkgeräten in einem Funkkanal mit einer ersten Funktionseinheit (11) in einer physikalischen Funkübertragungs-schicht, ausgestattet den Funkkanal zu analysieren und die Qualität des Funkkanals (QoC) festzustellen, einer zweiten Funktionseinheit (12) in einer Datensicherungs-Schicht, ausgestattet den Zugriff auf den Funkkanal in Abhängigkeit von der aktuellen Qualität (QoC) des Funkkanals und der Priorität der zu übertragenden Datenpakete je nach Qualität (QoS) des durch die Datenpakete realisierten Dienstes zu steuern, einer dritten Funktionseinheit (14) in einer Vermittlungs-Schicht, ausgestattet die Vermittlung der Datenpakete zu steuern, und
einer Steuereinheit (13), ausgestattet die Datenpakete nur dann zur Vermittlung durch die dritten Funktionseinheit (14) freizugeben, wenn die Qualität (QoS) des durch die Datenpakete realisierten Dienstes mit der in der ersten Funktionseinheit (11) festgestellten Qualität (QoC) des Funkkanals hinreichend korrespondiert,
wobei die Steuereinheit (13) über eine Schnittstelle (18) mit einer vierten Funktionseinheit (15) in einer Transport-Schicht in Verbindung, steht, und
wobei die Steuereinheit (13) ausgestattet ist ein Transport-Protokoll (TCP/UDP) auf der Grundlage der Qualität (QoS) des durch die Datenpakete realisierten Dienstes und der in der ersten Funktionseinheit (11) festgestellten Qualität (QoC) des Funkkanals festzulegen und die vierte Funktionseinheit (15) anzusteuern, um die Datenpakete in das entsprechende Transport-Protokoll (TCP/UDP) umzusetzen.

2. Funkübertragungssystem nach Anspruch 1,
**dadurch gekennzeichnet,**
**dass** die zweite Funktionseinheit (12) in der Datensicherungs-Schicht ausgestattet ist nicht nur den Zugriff auf den Funkkanal, sondern auch die Auswahl einer geeigneten Wellenform in Abhängigkeit von der aktuellen Qualität (QoC) des Funkkanals und der Priorität der zu übertragenden Datenpakete je nach Qualität (QoS) des durch die Datenpakete realisierten Dienstes zu steuern.

3. Funkübertragungssystem nach Anspruch 1 oder 2,
**dadurch gekennzeichnet,**
**dass** die Steuereinheit (13) mit der ersten Funktionseinheit (11) und mit der zweiten Funktionseinheit (12) über eine erste Schnittstelle (10) und mit der dritten Funktionseinheit (14) über eine zweite Schnittstelle (17) verbunden ist.

4. Funkübertragungssystem nach einem der Ansprüche 1 bis 3,
**dadurch gekennzeichnet,**
**dass** die Steuereinheit (13) über eine vierte Schnittstelle (19) mit einer fünften Funktionseinheit (16) in einer Anwendungs-Schicht in Verbindung steht.

5. Funkübertragungssystem nach Anspruch 4,
**dadurch gekennzeichnet,**
**dass**, wenn die Datenpakete zur Vermittlung durch die dritte Funktionseinheit (14) nicht freigegen werden können, die Steuereinheit (13) ausgestattet ist die fünfte Funktionseinheit (16) so anzusteuern, das eine entsprechende Meldung an den Benutzer ausgegeben wird.

6. Funkübertragungssystem nach einem der Ansprüche 1 bis 5,
**dadurch gekennzeichnet,**
**dass** die Steuereinheit (13) ausgestattet ist die dritte Funktionseinheit (14) so anzusteuern, das diese durch geeignete Vermittlung (Routing) die für die jeweilige Qualität (QoS) des durch die Datenpakete realisierten Dienstes benötigte Übertragungskapazität des Funkkanals zur Verfügung stellt.

7. Funkübertragungssystem nach einem der Ansprüche 1 bis 6,
**dadurch gekennzeichnet,**
**dass** die Steuereinheit (13) ausgestattet ist die dritte Funktionseinheit (14) so anzusteuern, das diese durch geeignete Auswahl einer Wellenform die für die jeweilige Qualität (QoS) des durch die Datenpakete realisierten Dienstes benötigte Übertragungskapazität des Funkkanals zur Verfügung stellt.

8. Funkübertragungssystem nach einem der Ansprüche 1 bis 7,
**dadurch gekennzeichnet,**
**dass** die Steuereinheit (13) ausgestattet ist eine Sortierung der Datenpakete nach der von der jeweiligen Qualität (QoS) des durch die Datenpakete realisierten Dienstes geforderten Priorität vornimmt und die dritte Funktionseinheit (14) zur Durchführung der Vermittlung der Datenpakete in dieser Reihenfolge anzusteuern.

9. Funkübertragungssystem nach einem der Ansprüche 1 bis 8,
**dadurch gekennzeichnet,**
**dass** die Steuereinheit (13) ausgestattet ist eine Prognose der sich entwickelnden künftigen Qualität des Funkkanals (QoC) auf der Grundlage von ermittelten Geschwindigkeitsvektoren der sich bewegenden Funkgeräte zu erstellen.

10. Verfahren zum Betreiben eines Funkübertragungssystems mit mehreren Bearbeitungsschichten zur Übertragung von Datenpaketen zwischen verschiedenen Funkgeräten in einem Funkkanal mit folgenden Verfahrensschritten:
- Analysieren des Funkkanals und Feststellen der Qualität (QoC) des Funkkanals mittels einer ersten Funktionseinheit (11) in einer physikalischen Funkübertragungs-Schicht,
- Steuern des Zugriffs auf den Funkkanal in Abhängigkeit von der aktuellen Qualität (QoC) des Funkkanals und in Abhängigkeit von der Priorität der zu übertragenden Datenpakete je nach Qualität (QoS) des durch die Datenpakete realisierten Dienstes mittels einer zweiten Funktionseinheit (12) in einer Datensicherungs-Schicht,
- Freigeben der Datenpakete nur dann zur Vermittlung durch die dritte Funktionseinheit (14) mittels einer Steuereinheit (13), wenn die Qualität (QoS) des durch die Datenpakete realisierten Dienstes mit der in der ersten Funktionseinheit (11) festgestellten Qualität (QoC) des Funkkanals hinreichend korrespondiert,
- Festlegen eines Transport-Protokolls (TCP/UDP) auf der Grundlage der Qualität (QoS) des durch die Datenpakete realisierten Dienstes und der in der ersten Funktionseinheit (11) festgestellten Qualität (QoC) des Funkkanals mittels der Steuereinheit (13) und
- Ansteuern einer in einer Transport-Schicht vorgesehenen, vierten Funktionseinheit (15) mittels der Steuereinheit (13) zur Umsetzung der Datenpakete in das entsprechende Transport-Protokoll (TCP/UDP).

11. Verfahren nach Anspruch 10,
**dadurch gekennzeichnet,**
**dass** nach der Analyse des Funkkanals eine adaptive Anpassung der bei der Übertragung verwendeten Wellenform durch Auswahl einer geeigneten Wellenform erfolgt.

12. Verfahren nach Anspruch 10 oder 11,
**gekennzeichnet durch**
Ausgeben einer entsprechenden Meldung an den Benutzer mittels einer fünften Funktionseinheit (16) in einer Anwendungs-Schicht, wenn die Datenpakete zur Vermittlung durch die dritte Funktionseinheit (14) nicht freigegen werden können.

13. Verfahren nach einem der Ansprüche 10 bis 12,
**gekennzeichnet durch**
Ansteuern der dritten Funktionseinheit (14) mittels der Steuereinheit (13) so, dass diese **durch** geeignete Vermittlung (Routing) die für die jeweilige Qualität (QoS) des **durch** die Datenpakete realisierten Dienstes benötigte Übertragungskapazität des Funkkanals zur Verfügung stellt.

14. Verfahren nach einem der Ansprüche 10 bis 13,
**gekennzeichnet durch**
Sortieren der Datenpakete nach der von der jeweiligen Qualität (QoS) des **durch** die Datenpakete realisierten Dienstes geforderten Priorität mittels der Steuereinheit (13) und Ansteuern der dritten Funktionseinheit (14) zur Durchführung der Vermittlung der Datenpakete in dieser Reihenfolge.

15. Verfahren nach einem der Ansprüche 10 bis 14,
**gekennzeichnet durch**
Erstellen einer Prognose der sich entwickelnden künftigen Qualität (QoC) des Funkkanals auf der Grundlage von ermittelten Geschwindigkeitsvektoren der sich bewegenden Funkgeräte.

## Claims

1. Radio-transmission system with a plurality of processing layers for the transmission of data packets between different radio appliances in a radio channel comprising
a first functional unit (11) in a physical radio-transmission layer, equipped to analyse the radio channel and to determine the quality of the radio channel (QoC);
a second functional unit (12) in a data back-up layer, equipped to control access to the radio channel dependent upon the current quality (QoC) of the radio channel and the priority of the data packets to be transmitted according to the quality (QoS) of the service realised by the data packets;
a third functional unit (14) in a switching layer, equipped to control the switching of the data packets; and
a management unit (13), equipped to release the data packets for switching by the third functional unit (14) only if the quality (QoS) of the service realised by the data packets corresponds sufficiently with the quality (QoC) of the radio channel determined in the first functional unit (11),
wherein the management unit (13) is connected via an interface (18) to a fourth functional unit (15) in a transport layer, and
wherein the management unit (13) is equipped to determine a transport protocol (TCP/UDP) on the basis of the quality (QoS) of the service realised by the data packets and the quality (QoC) of the radio channel determined in the first functional unit (11) and to control the fourth functional unit (15) in order to convert the data packets into the corresponding transport protocol (TCP/UDP).

2. Radio-transmission system according to claim 1,
**characterised in that**
the second functional unit (12) in the data back-up layer is equipped to control not only the access to the radio channel but also the selection of an appropriate waveform dependent upon the current quality (QoC) of the radio channel and the priority of the data packets to be transmitted according to the quality (QoS) of the service realised by the data packets.

3. Radio-transmission system according to claim 1 or 2,
**characterised in that**
the management unit (13) is connected to the first functional unit (11) and to the second functional unit (12) via a first interface (10) and to the third functional unit (14) via a second interface (17).

4. Radio-transmission system according to any one of claims 1 to 3,
**characterised in that**
the management unit (13) is connected via a fourth interface (19) to a fifth functional unit (16) in an applications layer.

5. Radio-transmission system according to claim 4,
**characterised in that**,
if the data packets cannot be released for switching by the third functional unit (14), the management unit (13) is equipped to control the fifth functional unit (16) in such a manner that a corresponding message is issued to the user.

6. Radio-transmission system according to any one of claims 1 to 5,
**characterised in that**
the management unit (13) is equipped to control the functional unit (14) in such a manner that it makes available through appropriate switching (routing) the transmission capacity of the radio channel required for the respective quality (QoS) of the service realised by the data packets.

7. Radio-transmission system according to any one of claims 1 to 6,
**characterised in that**
the management unit (13) is equipped to control the third functional unit (14) in such a manner that it makes available through appropriate selection of a waveform the transmission capacity of the radio channel required for the respective quality (QoS) of the service realised by the data packets.

8. Radio-transmission system according to any one of claims 1 to 7,
**characterised in that**
the management unit (13) is equipped to implement a sorting of the data packets according to the priority required by the respective quality (QoS) of the service realised by the data packets and to control the third functional unit (14) to implement the switching of the data packets in this sequence.

9. Radio-transmission system according to any one of claims 1 to 8,
**characterised in that**
the management unit (13) is equipped to provide a prognosis regarding the developing, future quality of the radio channel (QoC) on the basis of the determined velocity vectors of the moving radio appliances.

10. Method for operating a radio-transmission system with a plurality of processing layers for the transmission of data packets between different radio devices in a radio channel comprising the following procedural stages:
- analysis of the radio channel and determination of the quality (QoC) of the radio channel by means of a first functional unit (11) in a physical radio transmission layer,
- control of access to the radio channel dependent upon the current quality (QoC) of the radio channel and dependent upon the priority of the data packets to be transmitted according to the quality (QoS) of the system realised by the data packets by means of a second functional unit (12) in a data back-up layer,
- release of the data packets for switching by the third functional unit (14) by means of a management unit (13), only if the quality (QoS) of the service realised by the data packets corresponds sufficiently to the quality (QoC) of the radio channel determined in the first functional unit (11),
- determination of a transport protocol (TCP/UDP) on the basis of the quality (QoS) of the service realised by the data packets and the quality (QoC) of the radio channel determined in the first functional unit (11) and
- control by means of the management unit (13) of a fourth functional unit (15) provided in a transport layer in order to convert the data packets into the corresponding transport protocol (TCP/UDP).

11. Method according to claim 10,
**characterised in that**,
after the analysis of the radio channel, an adaptive matching of the waveform used in the transmission is implemented by selecting an appropriate waveform.

12. Method according to claim 10 or 11,
**characterised by**
an issue of a corresponding message to the user by means of a fifth functional unit (16) in an applications layer, if the data packets cannot be released for switching by the third functional unit (14).

13. Method according to claims 10 to 12,
**characterised by**
a control of the third functional unit (14) by means of the management unit (13) in such a manner that it makes available by appropriate switching (routing) the transmission capacity of the radio channel required for the respective quality (QoS) of the service realised by the data packets.

14. Method according to any one of claims 10 to 13,
**characterised by**
a sorting by means of the management unit (13) of the data packets according to the priority required by the respective quality (QoS) of the service realised by the data packets and a control of the third functional unit (14) to implement the switching of the data packets in this sequence.

15. Method according to any one of claims 10 to 14,
**characterised by**
a provision of a prognosis of the developing, future quality (QoC) of the radio channel on the basis of determined velocity vectors of the moving radio appliances.

## Revendications

1. Système de transmission radio avec plusieurs couches de traitement pour transmettre des paquets de données entre différents appareils radio dans un canal radio
avec une première unité fonctionnelle (11) dans une couche physique de transmission radio, agencée pour analyser le canal radio et pour déterminer la qualité du canal radio (QdC),
avec une deuxième unité fonctionnelle (12) dans une couche de liaison de données, agencée pour commander l'accès au canal radio en fonction de la qualité actuelle du canal radio (QdC) et de la priorité des paquets de données à transmettre selon la qualité (QdS) du service réalisé par les paquets de données,
avec une troisième unité fonctionnelle (14) dans une couche de réseau, agencée pour commander la communication des paquets de données, et
avec une unité de commande (13), agencée pour libérer ensuite les paquets de données pour la communication par la troisième unité fonctionnelle (14) uniquement si la qualité (QdS) du service réalisé par les paquets de données correspond suffisamment à la qualité (QdC) du canal radio déterminée dans la première unité fonctionnelle (11),
dans lequel l'unité de commande (13) communique par une interface (18) avec une quatrième unité fonctionnelle (15) dans une couche de transport, et
dans lequel l'unité de commande (13) est agencée pour commander un protocole de transport (TCP/LTDP), sur la base de la qualité (QdS) du service réalisé par les paquets de données et de la qualité (QdC) du canal radio déterminée dans la première unité fonctionnelle (11), et la quatrième unité fonctionnelle (15) afin de convertir les paquets de données dans le protocole de transport correspondant (TCP/UDP).

2. Système de transmission radio selon la revendication 1,
**caractérisé en ce**
**que** la deuxième unité fonctionnelle (12) dans la couche de liaison de données est agencée pour commander non seulement l'accès au canal radio, mais aussi la sélection d'une forme d'onde appropriée en fonction de la qualité actuelle (QdC) du canal radio et de la priorité des paquets de données à transmettre selon la qualité (QdS) du service réalisé par les paquets de données.

3. Système de transmission radio selon la revendication 1 ou 2,
**caractérisé en ce**
**que** l'unité de commande (13) est reliée à la première unité fonctionnelle (11) et à la deuxième unité fonctionnelle (12) par le biais d'une première interface (10), et à la troisième unité fonctionnelle (14) par le biais d'une deuxième interface (17).

4. Système de transmission radio selon une des revendications 1 à 3,
**caractérisé en ce**
**que** l'unité de commande (13) communique par le biais d'une quatrième interface (19) avec une cinquième unité fonctionnelle (16) dans une couche application.

5. Système de transmission radio selon la revendication 4,
**caractérisé en ce**
**que** si les paquets de données ne peuvent pas être libérés pour la communication par la troisième unité fonctionnelle (14), l'unité de commande (13) est agencée pour commander la cinquième unité fonctionnelle (16) de sorte qu'un message correspondant soit fourni à l'utilisateur.

6. Système de transmission radio selon une des revendications 1 à 5,
**caractérisé en ce**
**que** l'unité de commande (13) est agencée pour commander la troisième unité fonctionnelle (14) de sorte que celle-ci mette à disposition par une communication appropriée (routage) la capacité de transmission du canal radio nécessaire pour la qualité (QdS) respective du service réalisé par les paquets de données.

7. Système de transmission radio selon une des revendications 1 à 6,
**caractérisé en ce**
**que** l'unité de commande (13) est agencée pour commander la troisième unité fonctionnelle (14) de sorte que celle-ci mette à disposition par une sélection appropriée d'une forme d'onde la capacité de transmission du canal radio nécessaire pour la qualité respective (QdS) du service réalisé par les paquets de données.

8. Système de transmission radio selon une des revendications 1 à 7,
**caractérisé en ce**
**que** l'unité de commande (13) est agencée pour réaliser un tri des paquets de données selon la priorité exigée par la qualité respective (QdS) du service réalisé par les paquets de données et pour commander la troisième unité fonctionnelle (14) à des fins d'exécution de la communication des paquets de données dans cet ordre.

9. Système de transmission radio selon une des revendications 1 à 8,
**caractérisé en ce**
**que** l'unité de commande (13) est agencée pour établir un pronostic de la future qualité se développant du canal radio (QdC) sur la base des vecteurs de vitesse déterminés des appareils radio se déplaçant.

10. Procédé pour exploiter un système de transmission radio avec plusieurs couches de traitement afin de transmettre des paquets de données entre différents appareils radio dans un canal radio avec les étapes de procédé suivantes :
- analyser le canal radio et déterminer la qualité (QdC) du canal radio au moyen d'une première unité fonctionnelle (11) dans une couche physique de transmission radio,
- commander l'accès au canal radio en fonction de la qualité actuelle (QdC) du canal radio et en fonction de la priorité des paquets de données à transmettre en fonction de la qualité (QdS) du service réalisé par les paquets de données au moyen d'une deuxième unité fonctionnelle (12) dans une couche de liaison de données,
- libérer ensuite les paquets de données pour la communication par la troisième unité fonctionnelle (14) au moyen d'une unité de commande (13) uniquement si la qualité (QdS) du service réalisé par les paquets de données correspond suffisamment à la qualité (QdC) du canal radio déterminée dans la première unité fonctionnelle (11),
- déterminer au moyen de l'unité de commande (13) un protocole de transport (TCP/UDP) sur la base de la qualité (QdS) du service réalisé par les paquets de données et de la qualité (QdC) du canal radio déterminée dans la première unité fonctionnelle (11) et
- commander une quatrième unité fonctionnelle (15), prévue dans une couche de transport, au moyen de l'unité de commande (13) afin de convertir les paquets de données dans le protocole de transport correspondant (TCP/UDP).

11. Procédé selon la revendication 10,
**caractérisé en ce**
**que** après l'analyse du canal radio a lieu un ajustement adaptatif de la forme d'onde employée lors de la transmission par le biais de la sélection d'une forme d'onde appropriée.

12. Procédé selon la revendication 10 ou 11,
**caractérisé par**
la fourniture d'un message correspondant à l'utilisateur au moyen d'une cinquième unité fonctionnelle (16) dans une couche application si les paquets de données ne peuvent pas être libérés pour la communication par la troisième unité fonctionnelle (14).

13. Procédé selon l'une des revendications 10 à 12,
**caractérisé par**
la commande de la troisième unité fonctionnelle (14) au moyen de l'unité de commande (13) de sorte que celle-ci mette à disposition par une communication appropriée (routage) la capacité de transmission du canal radio nécessaire à la qualité respective (QdS) du service réalisé par les paquets de données.

14. Procédé selon l'une des revendications 10 à 13,
**caractérisé par**
le tri des paquets de données selon la priorité exigée par la qualité respective (QdS) du service réalisé par les paquets de données au moyen de l'unité de commande (13) et la commande de la troisième unité fonctionnelle (14) à des fins d'exécution de la communication des paquets de données dans cet ordre.

15. Procédé selon l'une des revendications 10 à 14,
**caractérisé par**
l'établissement d'un pronostic sur la future qualité se développant (QdC) du canal radio sur la base des vecteurs de vitesse déterminés des appareils radio se déplaçant.
